# EUROPÄISCHE PATENTSCHRIFT

(11) **EP 0 575 586 B1**
(45) Veröffentlichungstag und Bekanntmachung des Hinweises auf die Patenterteilung: **16.08.1995**
(21) Anmeldenummer: 93901630.9
(22) Anmeldetag: 13.01.1993
(51) Int. Cl.: B27G 19/10, B23D 47/00

(54) **SPANREISSSCHUTZ FÜR SÄGEMASCHINEN MIT SÄGEBLATT**
ANTI-SPLINTER DEVICE FOR SAWING MACHINES WITH A SAW BLADE
PROTECTION ANTI-ECLATEMENT POUR SCIES MECANIQUES A LAME DE SCIE

(30) Priorität: 14.01.1992 DE 4200713; 17.03.1992 DE 9203580 U; 24.08.1992 DE 4227765
(43) Veröffentlichungstag der Anmeldung: 29.12.1993
(73) Patentinhaber: ROBERT BOSCH GMBH, 70442 Stuttgart (DE)
(72) Erfinder: KÄLBER, Gerhard, D-7130 Mühlacker (DE); KÄLBER, Ralf, D-7130 Mühlacker (DE)
(86) Internationale Anmeldenummer: DE9300015
(87) Internationale Veröffentlichungsnummer: WO9313920

(56) Entgegenhaltungen:
- EP-A- 0 259 716
- CH-A- 380 356
- US-A- 2 854 043
- US-A- 3 623 518

## Beschreibung

Die Erfindung betrifft einen Spanreißschutz für Sägemaschinen mit Sägeblatt nach dem Oberbegriff des Anspruches 1.

Bei einer Vorrichtung zur Aufteilung metallkaschierter Laminatbahnen in einzelne Platten, wie sie z.B. in der EP 259 716 beschrieben ist, nimmt der Spanreißschutz mit Bezug auf das Sägeblatt eine unveränderte Position ein, was dazu führt, daß insbesondere bei Änderung der Schnittiefe kein funktionelles Zusammenwirken zwischen dem Spanreißschutz und dem Sägeblatt gewährleistet ist. Dies hat zur Folge, daß die Schnittkante des Werkstoffes nicht sauber ist und daher nachgearbeitet werden muß.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn es sich beim Spanreißschutz um einen Körper handelt, der im Betriebszustand der Handkreissäge gleichzeitig sowohl mit dem Werkstück als auch mit den herausfahrenden Sägeblatt-Zähnen in Wirkverbindung steht, so daß der Spanreißschutz nicht nur auf das Werkstück, sondern auch auf das Sägeblatt Kraft ausübt und mit einer Positioniereinrichtung zusammenarbeitet, durch die gewährleistet ist, daß der Spanreißschutz die betriebsgemäße Position einnimmt. Durch die Kraftausübung des Spanreißschutzes wird verhindert, daß es zu einer Spaltbildung zwischen den Sägeblatt-Zähnen und dem Spanreißschutz kommt. Da der Spanreißschutz im Bereich des Schnittes auf dem Werkstück satt aufliegt, bildet sich auch in diesem Bereich kein Spalt, der als Ursache einer unsauberen Schnittkante angesehen wird. Durch die Unterdrückung, ja sogar Beseitigung von Schwingungen des Sageblattes wird auch die Schnittlinie deutlich exakter.

Weitere zweckmäßige und vorteilhafte Ausgestaltungen der Erfindung gehen aus den Unteransprüchen hervor.

Wird der vorgeschlagene Spanreißschutz bei Sägemaschinen mit Sägetisch eingesetzt, dann ist es zweckmäßig, wenn das auf dem Werkstück aufliegende Teil des Spanreißschutzes in der durch das Werkstück und den Sägetisch definierten Kontaktebene liegt oder aus dem Sägetisch in Richtung des Werkstückes herausragt. Der Alternativvorschlag ist insbesondere dann geeignet, wenn die Sägemaschine zum Schneiden von unebenen Werkstücken eingesetzt wird.

Eine weitere zweckmäßige Ausgestaltung sieht vor, daß der Spanreißschutz mit Bezug auf das Sägeblatt relativ verstellbar und hierbei einstellbar ist. Diese Maßnahme der Erfindung kann vor allem dann vorteilhaft genutzt werden, wenn die Handkreissäge als Tauchsäge ausgebildet ist, deren Tauchtiefe nach Bedarf verändert wird. Durch Gas radiale Verstellen des Spanreißschutzes ist gewährleistet, daß der Spanreißschutz immer zumindest mit den Sägeblatt-Zähnen in Druckverbindung steht.

Eine weitere zweckmäßige Ausgestaltung der Erfindung sieht vor, daß der Spanreißschutz mit der Sägemaschine gelenkig verbindbar und um die Achse des Sägeblatts oder um eine parallel zu dieser Achse verlaufenden Achse verschwenkbar ist. Durch diese Maßnahme ist gewährleistet, daß der Spanreißschutz mit den Sägeblatt-Zähnen auch dann betrieblich verbindbar ist, wenn sich die Tauchtiefe des Sägeblatts während des Schneidevorgangs ändert. Ferner ist vorgesehen, daß der Spanreißschutz mit mindestens einem Federelement zusammenarbeitet, durch das der auf das Sägeblatt wirkende Druck des Spanreißschutzes bestimmbar ist. Diese Maßnehme berücksichtigt vor allem die Tatsache, daß bei einer Sägemaschine Sägeblätter mit unterschiedlichen Maßen eingesetzt werden können.

Eine weitere besonders zweckmäßige Ausgestaltung sieht vor, daß der Spanreißschutz einen mit dem Körper des Sägeblatts in Druckverbindung stehenden Fühler aufweist, der das mit den Sägeblatt-Zähnen in Druckverbindung stehende und als Spanreißschutzorgan ausgebildete Teil trägt. Durch diese Maßnahmen wird die Abnutzung des Teils, das mit den Sägeblatt-Zähnen in Druckverbindung steht, deutlich verringert, da der Fühler den eigentlichen vom Spanreißschutz herrührenden Druck auf das Sägeblatt überträgt, während das Spanreißschutzorgan, das mit den Sägeblattzähnen in Wirkverbindung steht, auf das Sägeblatt minimalen Druck ausübt. Der Fühler, der vorzugsweise aus Lagerwerkstoff besteht, dient gleichzeitig als Schwingungsdämpfer des Sägeblattes, so daß durch einfache Maßnahmen zwei Vorteile erreicht werden: Zum einen wird die Abnutzung des Spanreißschutzes deutlich verringert, zum anderen kann das Spanreißschutzorgan aus einem deutlich weicheren Werkstoff bestehen als der Fühler.

Eine weitere besonders zweckmäßige Ausgestaltung der Erfindung sieht vor, daß der Spanreißschutz in einem mit der Sägemaschine lösbar verbindbaren Gehäuse unterbringbar ist, so daß er, sind die einzelnen Teile des Spanreißschutzes abgenutzt, ohne weiteres ersetzt werden können.

Ferner ist vorgesehen, daß die Positioniereinrichtung die Form eines Armes aufweist, der um eine Achse verschwenkbar ist, die parallel zur Achse des Sägeblattes verläuft bzw. entlang einer Kurve verstellbar ist, die in einer senkrecht zur Achse verlaufenden Ebene liegt. Dabei können diese Maßnahmen auch so vorgesehen sein, daß der Spanreißschutz die Form eines Zylinderabschnittes aufweist, um seine Achse verdrehbar ist und aus einem schneidbaren Werkstoff besteht. Im Rahmen dieses Erfindungsgedankens ist es besonders vorteilhaft, wenn die Schwenkachse des Armes zur Achse des Sägeblattes 14 einen Abstand aufweist, der dem Radius des zylinderförmigen Spanreißschutzes entspricht. Durch die Merkmale des Anspruches 17 ist sichergestellt, daß der Spanreißschutz immer im Bereich der aus dem Werkstück herausfahrenden Sägeblattzähne angeordnet ist. Der Vorteil der Maßnahmen nach Anspruch 18 besteht darin, daß der Spanreißschutz von seiner Arbeitsseite gleichmäßig abgenutzt wird. Schließlich ist vorgesehen, daß die radiale Außenseite des Spanreißschutzes zum Sägeblatt hin abfällt.

Dadurch wird ein betriebsgemäßes Aufliegen des Spanreißschutzes auch dann gewährleistet, wenn das Sageblatt mit der Ebene des Werkstückes einen scharfen Winkel definiert.

Einige Ausführungsbeispiele der Erfindung sind in der Zeichnung schematisch dargestellt und werden im folgenden näher erläutert. Es zeigen
- Fig. 1: einen Teil einer Sägemaschine in vertikaler Draufsicht mit einem Spanreißschutz,
- Fig. 2: eine Sägemaschine mit einem weiteren Spanreißschutz,
- Fig. 3: eine Sagemaschine, deren Spanreißschutz schwenkbar gelagert ist,
- Fig. 4: die in Fig. 3 dargestellte Sägemaschine in Richtung des Pfeiles IV, und zwar während des Schneidevorganges,
- Fig. 5: die in Fig. 4 dargestellte Sägemaschine vor dem Schneidevorgang,
- Fig. 6: eine Sägemaschine mit einem Spanreißschutz, dessen Spanreißschutzorgans schwenkbar gelagert ist,
- Fig. 7: die in Fig. 6 dargestellte Sägemaschine in Seitenansicht,
- Fig. 8: einen Sägetisch mit Teilen des Spanreißschutzes,
- Fig. 9: eine Stichsäge mit Spanreißschutz in vertikaler Draufsicht,
- Fig. 10: die in Fig. 9 dargestellte Stichsäge in Seitenansicht.
- Fig. 11: einen als separates Teil ausgebildeten Spanreißschutz,
- Fig. 12: den in Fig. 11 dargestellten Spanreißschutz in betrieblicher Verbindung mit einer Handkreissäge,
- Fig. 13.: die in Fig. 12 dargestellte Handkreissäge in Richtung des Pfeiles XII,
- Fig. 14: einen Teil einer Sägemaschine in Seitenansicht mit einer als Arm ausgebildeten Positioniereinrichtung,
- Fig. 15: die in Fig. 14 dargestellte Sägemaschine in Stirnansicht,
- Fig. 16 und 17: einen Teil einer Sägemaschine mit zwei Positioniereinrichtungen und
- Fig. 18: eine Sägemaschine mit einem schwenkbaren Sägetisch und einer Positioniereinrichtung.

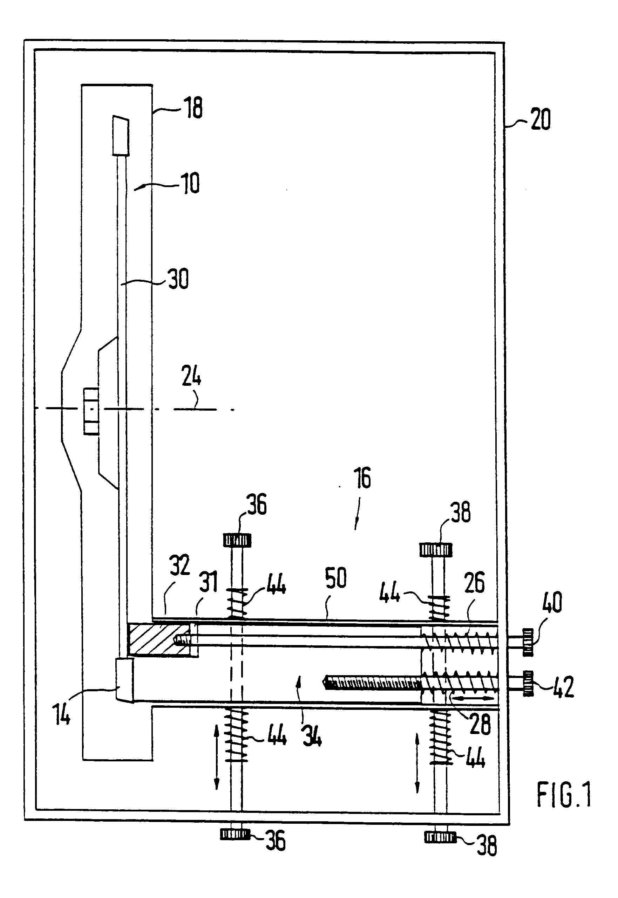

In Fig. 1 ist ein Teil einer Sägemaschine mit Sägeblatt 10 und Spanreißschutz 16 dargestellt. Der Spanreißschutz 16 ist mit der Sägemaschine betrieblich verbindbar, auf ein nicht dargestelltes Werkstück auflegbar und seitlich vom Sägeblatt 10 sowie im Bereich der aus dem Werkstück herausfahrenden Sägeblatt-Zähne 14 anorderbar. Im Sägetisch 20 der Sägemaschine ist ein Sägeblatt-Durchtritt 18 ausgebildet, in dem das Sägeblatt 10 um die Achse 24 drehbar gelagert ist. Der Spanreißschutz 16 ist so ausgebildet, daß er mit den herausfahrenden Sägeblatt-Zähnen 14 in Druckverbindung steht. Der Spanreißschutz 16 ist ferner so ausgebildet, daß sein auf das Werkstück auflegbare Teil 34 in der durch das Werkstück und den Sägetisch 20 definierten Kontaktebene liegt oder aus dem Sägetisch 20 in Richtung des Werkstückes herausragt. Der Spanreißschutz 16 ist im Gehäuse 15 untergebracht, dessen radiale Lage durch die Schrauben 36 und 38 bestimmbar ist. Da es sich um keine starre Verbindung zwischen den Einstellschrauben 36, 38 und dem Gehäuse 50 handelt, sind Federelemente 44 vorgesehen, die auf das Gehäuse 50 Druck ausüben.

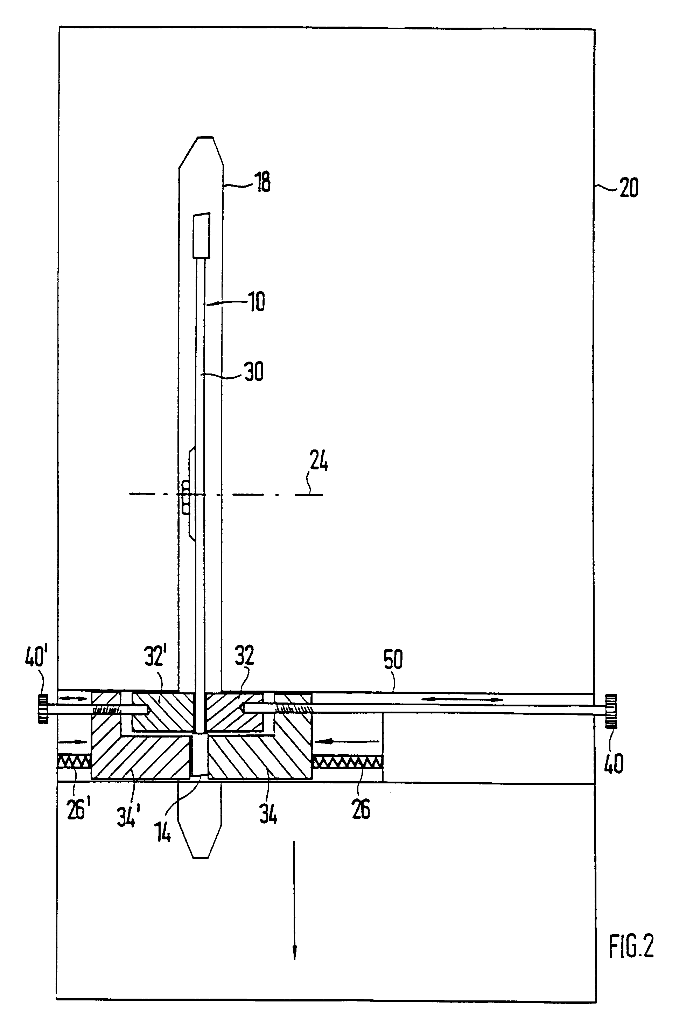

Der Spanreißschutz 16 besitzt ferner einen Fühler 32, der mit dem Körper 30 des Sägeblattes in Druckverbindung steht, und das mit dem Sägeblatt-Zähnen 14 in Druckverbindung stehende und als Spanreißschutzorgan ausgebildete Teil 34. Man erkennt, daß der Fühler 32 sowie das Spanreißschutzorgan 34 in Achsrichtung des Sägeblattes 24 verstellbar und hierbei einstellbar sind. Das Spanreißschutzorgan 34 ist mit Bezug auf den Fühler 32 relativ verstellbar, wobei der Fühler 32 als Mitnehmer des Spanreißschutzorgangs 34 ausgebildet ist. In der Ausgangsstellung, das heißt vor der Inbetriebnahme des Spanreißschutzes, ist zwischen dem Fühler 32 und dem Spanreißschutzorgan 34 ein Spalt 31 ausgebildet. Wird nun die Sägemaschine eingeschaltet, dann stehen die Sägeblatt-Zähne 14 mit dem aus schneidbaren Werkstoff bestehenden Spanreißschutzorgan 34 in Wirkverbindung, so daß der Spalt 31 minimiert wird. In diesem Bereich stützt sich das Spanreißschutzorgan am Fühler 32 ab. Zu einer weiteren Abnutzung des Spanreißschutzorgans 34 kommt es praktisch dann, wenn es zur Abnutzung des Fühlers 32 kommt, der mit dem ebenen Abschnitt des Körpers 30 in Druckverbindung steht. Obwohl sowohl der Fühler 32 als auch das Spanreißschutzorgan 34 mit jeweils einem Federelement 26 bzw. 28 in Druckverbindung stehen, kann das Federelement 28 das Spanreißschutzorgan 34 nur gegen den Fühler 32 drücken. Der Fühler 32 sowie das Spanreißschutzorgan 34 könnem zudem durch Einstellschrauben 40 und 42 reguliert werden, und zwar in Richtung der Achse 24. In Fig. 2 ist gezeigt, daß beide Seiten des Sägeblattes 10 mit jeweils einem Spanreißschutz zusammenarbeiten. Dabei sind die einzelnen Teile des Spanreißschutzes in etwa spiegelbildlich ausgebildet. Der Fühler 32', das Spanreißschutzorgan 34' sowie das Federelement 26' entsprechen in etwa den entsprechenden Teilen des anderen Spanreißschutzes.

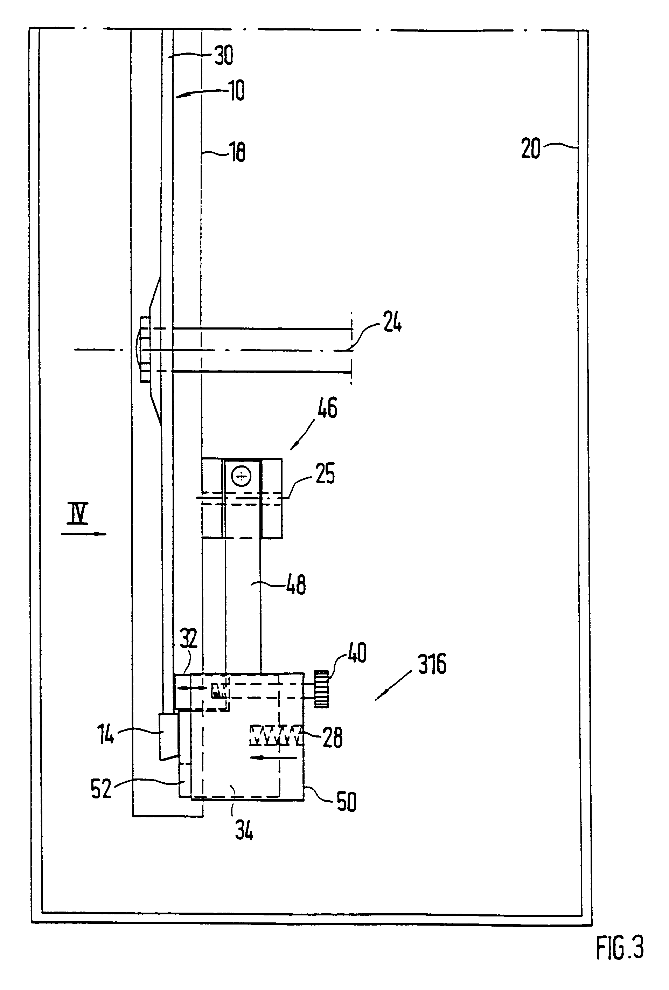

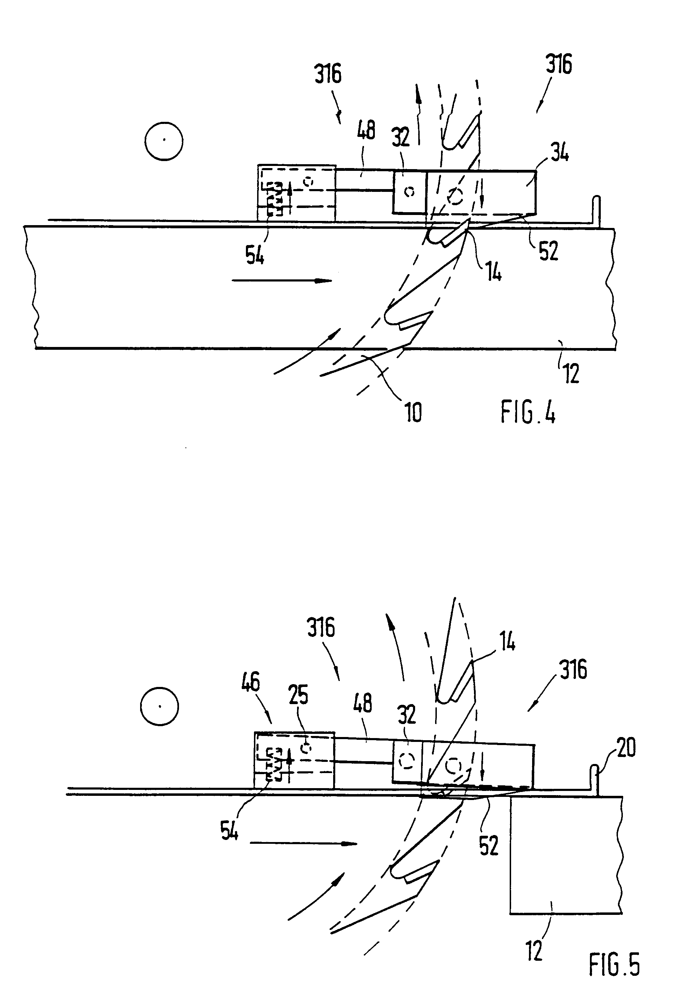

In den Figuren 3 bis 5 ist ein Spanreißschutz 316 dargestellt, der über eine Gelenkstange 48 und ein Gelenk 46 um eine Achse 25 verschwenkbar ist. Die Achse 25 verläuft parallel zur Achse 24 des Sägeblattes 10. Somit ist der Spanreißschutz 316 in Drehrichtung des Sägeblattes 10 verschwenkbar. Der Fühler 32 sowie das Spanreißschutzorgan 34 sind in einem Gehäuse 50 untergebracht. Wie insbesondere die Figuren 4 und 5 erkennen lassen, ist das Spanreißschutzorgan 34 voreilend und besitzt eine Anlaufschräge 52. Der Gelenkarm 48 arbeitet mit einer Druckfeder 54 zusammen, die bestrebt ist, den Spanreißschutz 316 gegen das Werkstück zu drücken.

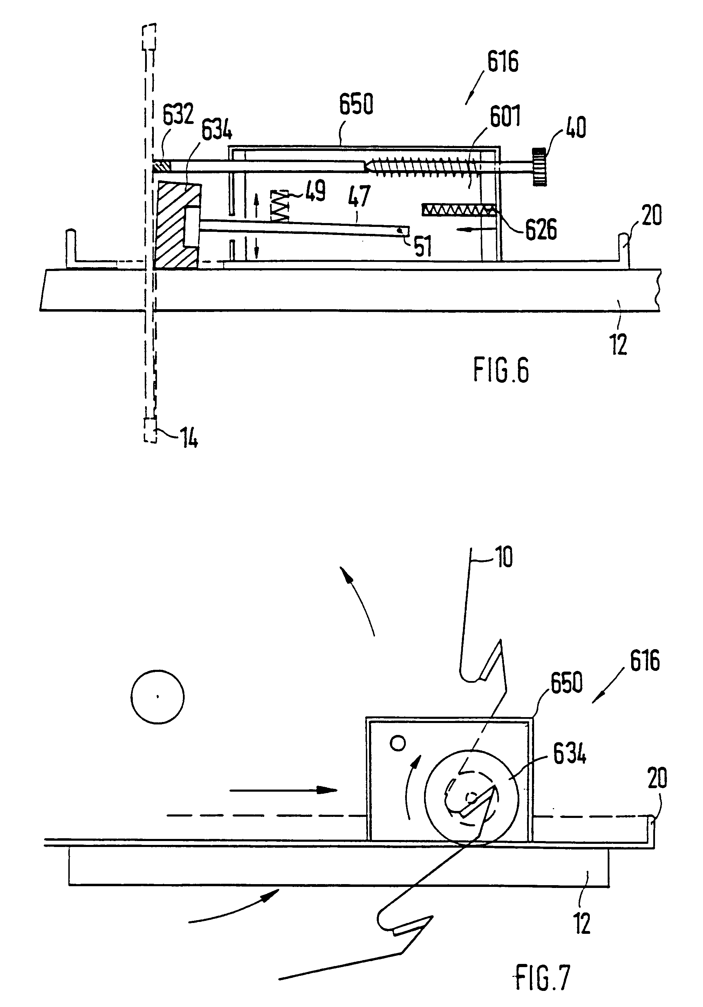

In den Figuren 6 und 7 ist eine Handkreissäge mit einem Spanreißschutz 616 dargestellt, der in einem Gehäuse 650 untergebracht ist und einen Fühler 632 sowie ein Spanreißschutzorgan 634 aufweist. Im Gehäuse 650 ist ein Körper 601 untergebracht, der mit dem Federelement 626 in Druckverbindung steht und sowohl den Fühler 632 als auch das Spanreißschutzorgan 634 trägt. Der Fühler 632 ist durch die Einstellschraube 40 einstellbar, während das Spanreißschutzorgan 634 mit dem Körper 601 gelenkig verbindbar und um die Achse 51 verschwenkbar ist. Das Spanreißschutzorgang 634 ist um die Längsachse des Gelenkarmes 47 verdrehbar und in Richtung der Pfeile verschenkbar. Der Gelenkarm 47 arbeitet mit einem Federelement 49 zusammen, welches bestrebt ist, das Spanreißschutzorgan 634 gegen das Werkstück 12 zu drücken.

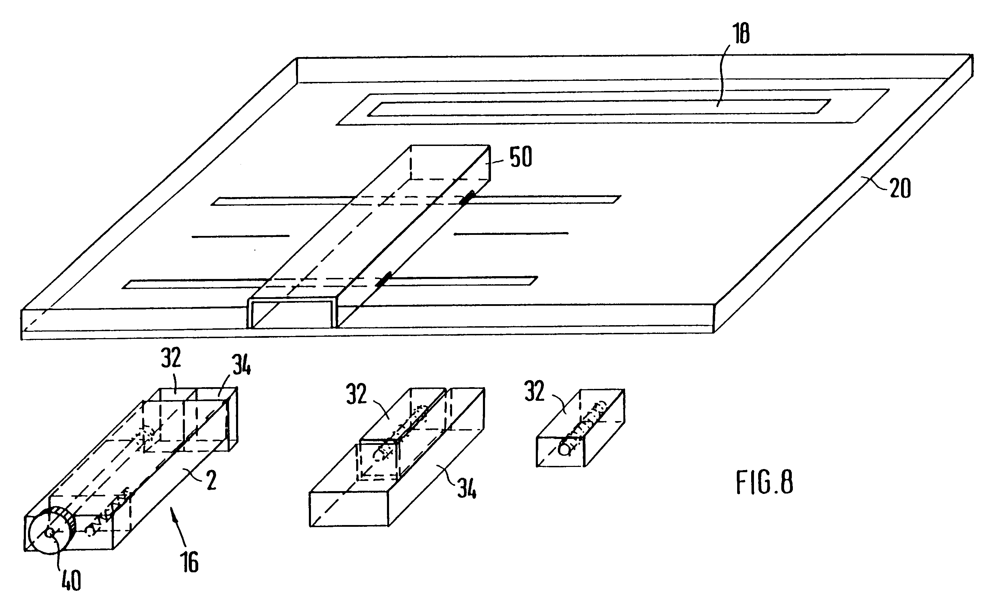

In Fig. 8 ist ein Sägetisch 20 mit einem Sägeblatt-Durchtritt 18 sowie einem Gehäuse 50 dargestellt. In das Gehäuse 50 ist der Spanreißschutz 16 mit Fühler 32 und Spanreißschutzorgan 34 einbringbar. Diese beiden Teile sind zudem in einem weiteren Gehäuse 2 Untergebracht, so daß das Einstecken bzw. die Herausnahme des Spanreißschutzes 16 in das Gehäuse 50 bzw. aus diesem problemlos erfolgen kann.

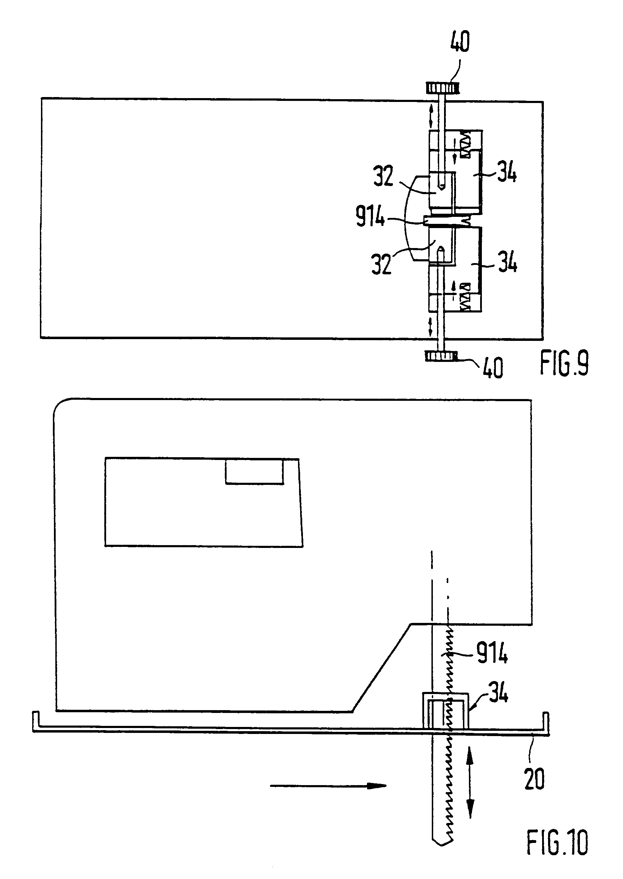

Die Fig. 9 und 10 zeigen, daß der Spanreißschutz auch bei einer Stichsäge verwendet werden kann, wobei das Sägeblatt 914 vertikale Hin- und Herbewegungen ausübt.

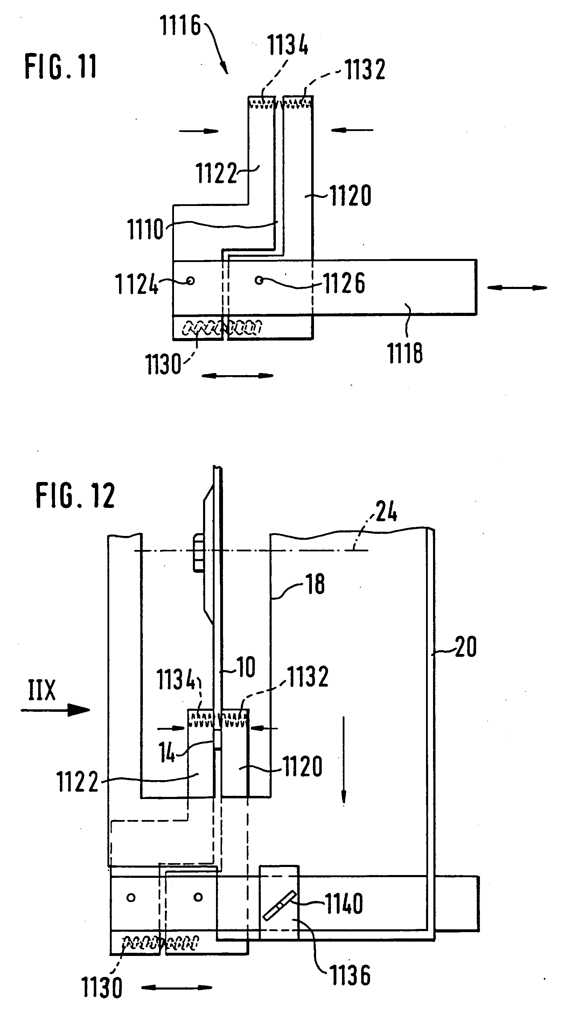

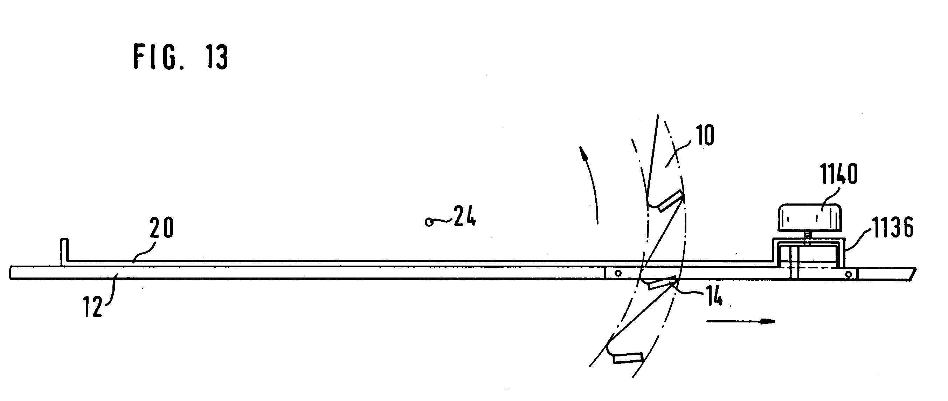

In den Fig. 11 bis 13 ist ein Spanreißschutz 1116 dargestellt, der als Zubehör für Handkreis- und Stichsägen vorgesehen und somit als separates Teil ausgebildet ist. Dieser Spanreißschutz 1116 besteht aus einem Steckteil 1116 mit zwei seitlich vom Sägeblatt 10 positionierbaren Spanreißschutzorganen 1120 und 1122 aus schneidbarem Werkstoff, d. h. einem Werkstoff, dessen Härte geringer ist als die Zähne der Sägemaschine. Die Spanreißschutzorgane 1120 und 1122 besitzen im Kontaktbereich mit dem Sägeblatt 10 Fühler 1132 und 1134, deren Härte größer ist als die Härte der Spanreißschutzorgane 1120 und 1122 und die vorzugsweise aus Lagerwerkstoff bestehen.

Ein weiteres Merkmal der Spanreißschutzorgange 1120 und 1122 ist, daß sie am Steckteil 1118 angelenkt sind, und zwar in den Bereichen 1124 und 1126. Die von den Fühlern 1132, 1134 abgewandten Enden der Spanreißschutzorgane 1120, 1122 arbeiten mit einer Druckfeder 1130 zusammen, die bestrebt ist, die Fühler 1132, 1134 gegen das Sägeblatt 10 zu drücken. Die Besonderheit dieser Anlenkung besteht insbesondere darin, daß durch den Spalt 1120, der zwischen den Spanreißschutzorganen 1120, 1122 ausgebildet ist, beide Spanreißschutzorgane unabhängig voneinander in Druckverbindung mit dem Sägeblatt 10 bringbar sind. Sie stehen sozusagen schwimmend mit dem Sageblatt 10 in Druckverbindung und können daher seitlichen Bewegungen des Sägeblattes folgen. Die Sägemaschine besitzt eine Steckaufnahme 1136 mit einer Spannschraube 1140, die zur Fixierung des Steckteils 1118 dient. Eine weitere Besonderheit des Spanreißschutzes 1116 besteht darin, daß er bevorzugt auch mit Führungsschienen für Sägemaschinen in Wirkverbindung gebracht werden kann, da seine Dicke etwa der Dicke der Führungsschienen entspricht, so daß der Spanreißschutz 1116 satt auf dem Werkstück aufliegen kann, ohne daß sich zwischen dem Sägezahn 14 und den Spanreißschutzorgan 1120, 1122 ein Spalt bilden würde, der zur Bildung von Splittern im Bereich oberer Kanten des Werkstückes entscheidend beiträgt.

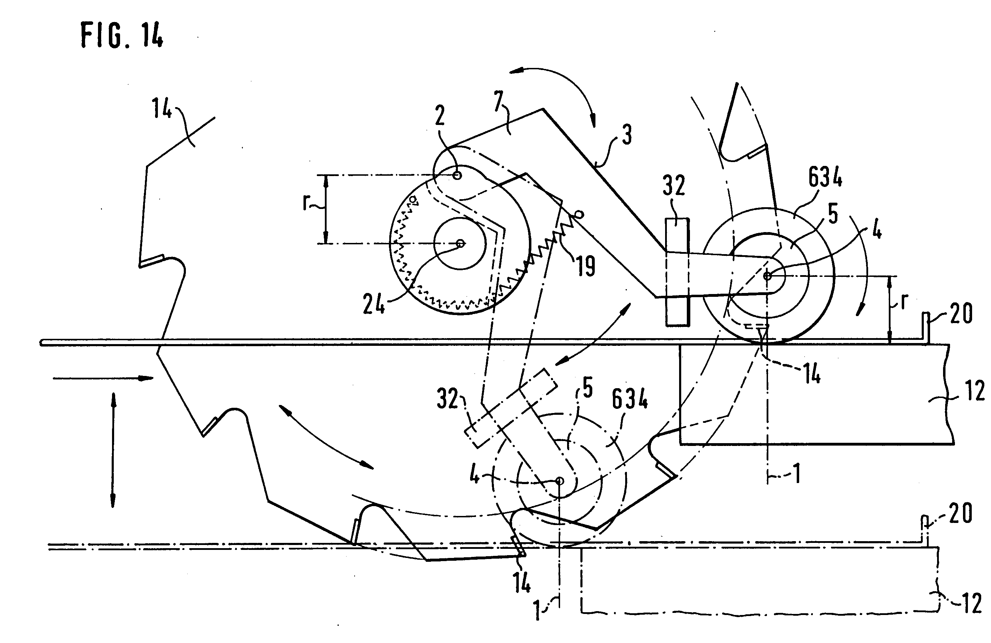

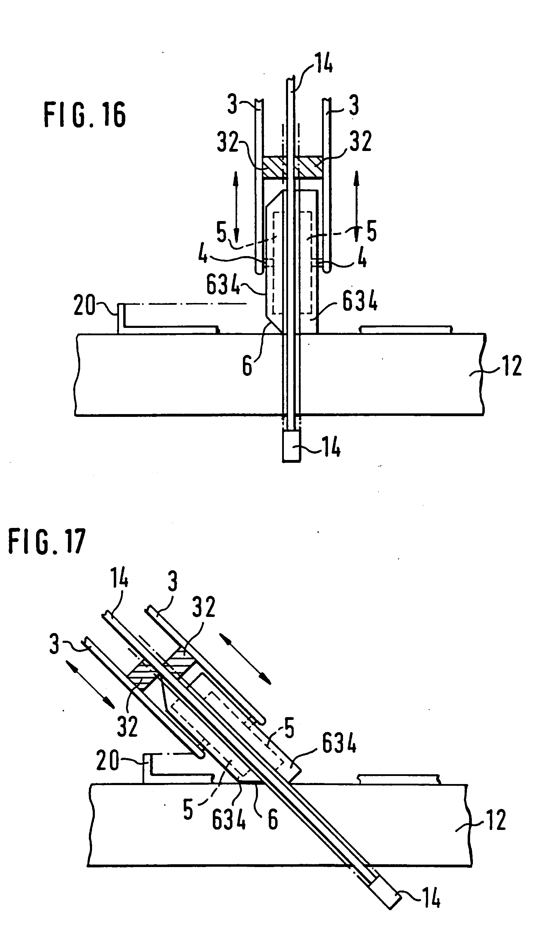

In den Figuren 14 bis 16 ist ein zylinderförmiges Spanreißschutzorgan 634 dargestellt, das von einer einen Arm 7 aufweisenden Positioniereinrichtung 3 getragen wird. Der Arm 7 ist zweimal gekröpft und im Abstand r senkrecht oberhalb der Achse 24 des Sägeblattes 14 angelenkt. Der Abstand r entspricht dem Radius r des Spanreißschutzorgans 634. Dadurch ist gewährleistet, daß das Spanreißschutzorgan 634 immer genau dort auf dem Werkstück 12 aufliegt, wo die Zähne des Sägeblattes 14 aus dem Werkstück herausfahren. Beim Verschwenken des Armes 7 wandert der Auflagepunkt des Spanreißschutzorgans 634 auf einer Kreislinie entlang dem Umfang des Sägeblattes 14, wobei es auf dem Werkstück 12 abrollen kann. Das Spanreißschutzorgan 634 weist eine zum Sägeblatt 14 hin offene zylinderförmige Ausnehmung 5 auf, seine Umfangsfläche 6 fällt zum Sägeblatt 14 hin ab (vgl. Figuren 16, 17). Durch diese Maßnahme ist bei einem aus schneidbarem Werkstoff wie Kunststoff bestehenden Spanreißschutzorgan erreichbar, daß es durch die Sägeblattzähne gleichmäßig abgenutzt wird. Um die Abnutzung des Organs 634 zu minimieren, ist auch in diesem Ausführungsbeispiel ein aus einem Lagerwerkstoff mit guten Gleiteigenschaften bestehender Fühler 32 vorgesehen. Der Fühler kann aus Bronze, Sintermetall oder Kohle bestehen.

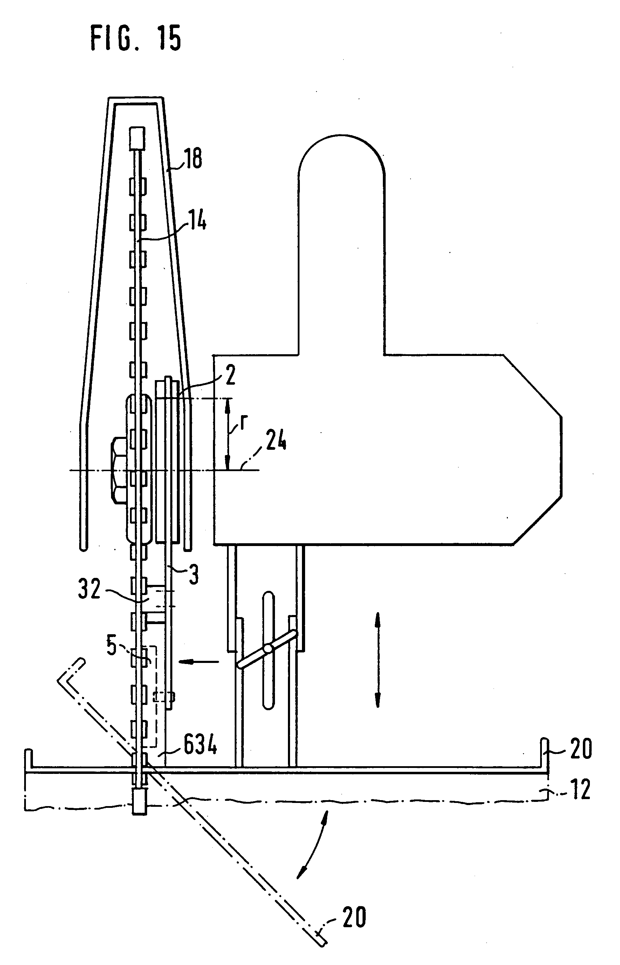

Der Arm 7 arbeitet mit einer Zugfeder 19 zusammen, die das Spanreißschutzorgan 634 gegen das Werkstück 12 andrückt. Auch nach einem Verstellen des Sägetisches 20 zur Veränderung der Schnittiefe oder einem Verschwenken zum Sägen einer Gehrung oder eines Winkelschnitts (siehe Figuren 15 und 17) kommt das Spanreißschutzorgan 634 automatisch immer an der richtigen Stelle im Bereich der Zähne des Sägeblatts 14 zu liegen. Aus den Figuren 16 und 17 ist ersichtlich, daß das Sägeblatt 14 zu beiden Seiten von je einem Spanreißschutzorgan 634 flankiert wird, die von parallel angeordneten, jedoch getrennten Armen 7 getragen werden.

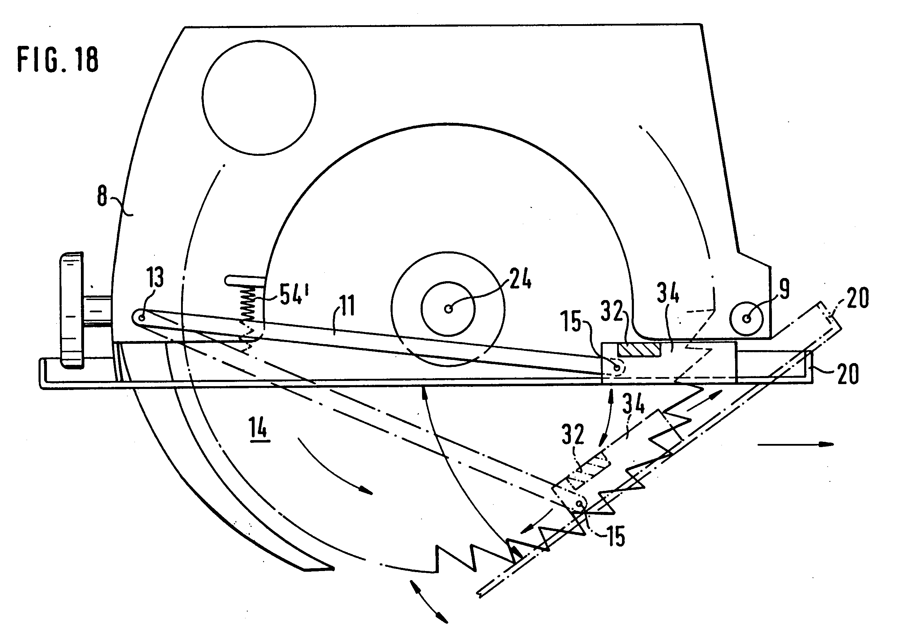

Wie das Ausführungsbeispiel nach Figur 18 zeigt, kann das Spanreißschutzorgan 34 aber auch klotzförmig ausgebildet und an eine als Stange 11 ausgebildete Positioniereinrichtung angelenkt sein. Diese ist in der Achse 13 am Gehäuse 8 bzw. an der Schutzhaube der Handkreissäge schwenkbar angeordnet. Die Achsen 13, 15 und 24 der Gelenke laufen parallel zueinander. Die an dem Sägeblatt 14 anliegende Fläche des Spanreißschutzorgans 34 ist deutlich, vorzugsweise mindestens etwa viermal, größer wie die von den Zähnen des Sägeblatts 14 bestrichenen Fläche, damit die Zähne bei jeder Schnittiefe d.h. bei jeder Stellung des Sägetisches 20 mit dem Spanreißschutzorgan 34 in Kontakt bleiben; auch dann, wenn der Sägetisch 20 um die Achse 9 verschwenkt wird. Das Spanreißschutzorgan 34 steht wie in den vorhergehenden Ausführungsbeispielen mit einem Fühler 32 in Verbindung, der sich an der unverzahnten Seitenfläche des Sägeblatts 14 abstützt. Der Fühler 32 ist dazu an einer achsnahen und von dem Sägetisch 20 fernliegenden Stelle des Spanreißschutzorgan 34 oder gar an einem entsprechenden Ausleger angeordnet.

Das Spanreißschutzorgan 34 kann in einer Nut des Sägetisches 20 entlang seiner Auflagefläche verschieblich sein oder wird mittels einer am Gehäuse 8 abgestützten Feder 54' auf das Werkstück angedrückt, so daß es stets flach aufliegt. Zum Andrücken des Spanreißschutzorgans 34 an das Sägeblatt 14 kann z.B. die Stange 11 dienen, die dann federnd ausgebildetist und mit Vorspannung zum Sägeblatt 14 hin am Gehäuse 8 montiert ist. Selbstverständlich sind auch die Positioniereinrichtungen 3 und 11 paarweise links und rechts neben dem Sägeblatt 14 angeordnet, so daß dieses beidseitig von je einem Spanreißschutzorgan 34 federnd beaufschlagt wird.

Die Positioniereinrichtung könnte selbstverständlich auch anders ausgebildet sein. Denkbar wäre insbesondere z.B. eine Steuerkurve, die parallel zum Sägeblatt verläuft und entlang eines Steuerarms geführt ist, dessen eines Ende den Ausreißschutz 34 trägt. Dabei müßten die Steuerungskurve und der Arm so bemessen sein, daß der Ausreißschutz beim Verstellen des Sägetisches die erforderliche Lage mit Bezug auf die aus dem Werkstück herausfahrenden Sägeblatt-Zähne einnimmt. Eine andere Ausführungsmöglichkeit bietet ein vorgespannter Seilzug, durch den der Ausreißschutz eingestellt wird.

Zusammenfassend kann festgestellt werden, daß der vorgeschlagene Spanreißschutz bzw. das Ausreißschutzsystem bei Handkreissägen, bei Stichsägen, stationären Sagen oder auch Großsägen eingesetzt werden kann. Die Herstellungskosten des Spanreißschutzes sind miminal, da er aus separaten Teilen hergestellt werden kann, die sodann mit einer Handkreissäge betrieblich verbunden werden. Das Ausreißen des Werkstoffes wird direkt am Sägezahn unterbunden, so daß es keiner parallelen Fuhrung des Sägetisches bedarf. Der komplette Ausreißschutz mit Fühler wird federnd am Sägeblatt geführt, so daß zwischen den Sägezähnen und Ausreißschutz keinerlei Spalt entsteht. Der Fühler kann aber auch nach Bedarf nachjustiert werden.

Ein weiterer Vorteil des vorgeschlagenen Spanreißschutzes besteht darin, daß er auch unterhalb des Sägetisches angebracht werden kann. Dadurch ist auch bei Unebenheiten der Werkstückoberfläche ein Aussplittern unterbunden. Dabei ist es vorteilhaft, den Spanreißschutz an der Sägemaschine federnd anzubringen. Fühler und Spanreißschutzorgan sind Formteile, die problemlos austauschbar und kostengünstig herstellbar sind.

## Patentansprüche

1. Spanreißschutz für Sägemaschinen mit einem Sägeblatt, der auf Werkstücke auflegbar und seitlich vom Sägeblatt anordenbar ist und mit diesem im Bereich der aus dem Werkstück herausfahrenden Sägeblatt-Zähne in Druckverbindung steht,
gekennzeichnet durch mindestens eine mit der Sägemaschine verbindbare und den Spanreißschutz (34, 634) tragende Positioniereinrichtung (3, 11) zur betriebsgemäßen Anordnung des Spanreißschutzes bei Änderung der Schnittiefe und/oder des Neigungswinkels des Sägeblattes (14).

2. Spanreißschutz nach Anspruch 1,
dadurch gekennzeichnet,
daß der Spanreißschutz (16) mit Bezug auf das Sägeblatt (10) radial verstellbar und hierbei einstellbar ist.

3. Spanreißschutz nach einem der Ansprüche 1 oder 2,
dadurch gekennzeichnet,
daß der auf das Sägeblatt (10) ausgeübte Druck des Spanreißschutzes (16,1116) einstellbar ist.

4. Spanreißschutz nach einem der Ansprüche 1 bis 3,
dadurch gekennzeichnet,
daß der Spanreißschutz (16,1116) einen mit dem Körper (30) des Sägeblatts (10) in Druckverbindung stehenden Fühler (32,1132,1134) aufweist, der das mit den Sägeblatt-Zähnen (14) in Druckverbinung stehende und als Spanreißschutzorgan ausgebildete Teil (34) trägt.

5. Spanreißschutz nach einem der Ansprüche 1 bis 4,
dadurch gekennzeichnet,
daß der Fühler (32,1132,1134) sowie das Spanreißschutzorgan (34) in Achsrichtung des Sägeblatts (24) verstellbar sind.

6. Spanreißschutz nach einem der Ansprüche 1 bis 5,
dadurch gekennzeichnet,
daß das Spanreißschutzorgan (34) mit Bezug auf den Fühler (32) relativ verstellbar ist und daß der Fühler (32) als Mitnehmer des Spanreißschutzorgangs (34) ausgebildet ist.

7. Spanreißschutzorgan nach einem der Ansprüche 1 bis 6,
dadurch gekennzeichnet,
daß der Fühler (32,1132,1134) aus Lagerwerkstoff ausgebildet ist, während das Spanreißschutzorgan (34) aus einem Werkstoff besteht, dessen Härte geringer ist als die Härte der Sägeblatt-Zähne (14).

8. Sägemaschine nach einem der Ansprüche 1 bis 7,
dadurch gekennzeichnet,
daß der Spanreißschutz (1116) aus einem mit der Sägemaschine lösbar verbindbaren Steckteil (1118) mit zwei seitlich vom Sägeblatt (18) anorderbaren Spanreißschutzorganen (1120,1122) besteht, die mit dem Sägeblatt (10) in Druckverbindung bringbar sind.

9. Sägemaschine nach einem der Ansprüche 1 bis 8,
dadurch gekennzeichnet,
daß die Spanreißschutzorgane (1120,1122) am Steckteil (1118) angelenkt sind.

10. Sägemaschine nach einem der Ansprüche 1 bis 9,
dadurch gekennzeichnet,
daß die Spanreißschutzorgane (1120,1122) mit mindestens einem Federelement (1130) zusammenarbeiten, das bestrebt ist, die Spanreißschutzorgane (1120, 1122) mit dem Sägeblatt (10) in Druckverbindung zu bringen.

11. Sägemaschine nach einem der Ansprüche 1 bis 10,
dadurch gekennzeichnet,
daß die Spanreißschutzorgane (1120,1122) im Kontaktbereich mit dem Sägeblatt (10) Fühler (1132, 1134) besitzen.

12. Sägemaschine nach einem der Ansprüche 1 bis 11,
dadurch gekennzeichnet,
daß die Spanreißschutzorgane (1120,1122) stufenförmig abgesetzte Teile sind, die aus schneidbarem Werkstoff bestehen.

13. Spanreißschutz nach einem der Ansprüche 1 bis 12,
dadurch gekennzeichnet,
daß der Spanreißschutz (16) mit der Sägemaschine gelenkig verbindbar und um die Achse (24) des Sägeblatts (10) oder um eine parallel zu dieser Achse (24) verlaufende Achse (25) verschwenkbar ist.

14. Spanreißschutz nach einem der Ansprüche 1 bis 13,
dadurch gekennzeichnet,
daß die Positioniereinrichtung (3, 11) die Form eines Armes aufweist, der um eine Achse (2, 16) verschwenkbar ist, die parallel zur Achse (24) des Sägeblattes (14) verläuft bzw. entlang einer Kurve verstellbar ist, die in einer senkrecht zur Achse verlaufenden Ebene liegt.

15. Spanreißschutz nach einem der Ansprüche 1 bis 14,
dadurch gekennzeichnet,
daß der Spanreißschutz (634) die Form eines Zylinderabschnittes aufweist, um seine Achse (4) verdrehbar ist und aus einem schneidbaren Werkstoff besteht.

16. Spanreißschutz nach einem der Ansprüche 1 bis 15,
dadurch gekennzeichnet,
daß die Schwenkachse (2) des Armes zur Achse (24) des Sägeblattes (14) einen Abstand aufweist, der dem Radius des zylinderförmigen Spanreißschutzes (634) entspricht.

17. Spanreißschutz nach einem der Ansprüche 1 bis 16,
dadurch gekennzeichnet,
daß die Achse (2) des Armes (3) oberhalb der Achse (24) des Sägeblattes (14) angeordnet ist und mit dieser eine senkrecht zur Werkstückoberfläche verlaufende Ebene definiert.

18. Spanreißschutz nach einem der Ansprüche 1 bis 17,
dadurch gekennzeichnet,
daß der Spanreißschutz (634) eine zum Sägeblatt (14) hin offene zylinderförmige Ausnehmung (5) aufweist.

19. Spanreißschutz nach einem der Ansprüche 1 bis 18,
dadurch gekennzeichnet,
daß die radiale Außenseite (5) des Spanreißschutzes (634) zum Sägeblatt (14) hin abfällt.

## Claims

1. Anti-splintering device for sawing machines having a saw blade which can be laid on workpieces and can be arranged laterally from the saw blade and is in pressure contact with the latter in the region of the teeth of the saw blade emerging from the workpiece, characterized by at least one positioning device (3, 11) which can be connected to the sawing machine and supports the anti-splintering device (34, 634) for the correct operational arrangement of the anti-splintering device in the event of a change in the cutting depth and/or in the angle of inclination of the saw blade (14).

2. Anti-splintering device according to Claim 1, characterized in that the anti-splintering device (16) is radially adjustable relative to the saw blade (10) and can thus be set.

3. Anti-splintering device according to one of Claims 1 and 2, characterized in that the pressure exerted on the saw blade (10) by the anti-splintering device (16, 1116) can be set.

4. Anti-splintering device according to one of Claims 1 to 3, characterized in that the anti-splintering device (16, 1116) has a sensor (32, 1132, 1134) in pressure contact with the body (30) of the saw blade (10), which sensor supports the part (34) which is in pressure contact with the teeth (14) of the saw blade and is designed as an anti-splintering member.

5. Anti-splintering device according to one of Claims 1 to 4, characterized in that the sensor (32, 1132, 1134) and the anti-splintering member (34) are adjustable in the axial direction of the saw blade (24).

6. Anti-splintering device according to one of Claims 1 to 5, characterized in that the anti-splintering member (34) is adjustable relative to the sensor (32) and that the sensor (32) is designed as a dog of the anti-splintering member (34).

7. Anti-splintering member according to one of Claims 1 to 6, characterized in that the sensor (32, 1132, 1134) is made from bearing material, whereas the anti-splintering member (34) consists of a material whose hardness is less than the hardness of the teeth (14) of the saw blade.

8. Sawing machine according to one of Claims 1 to 7, characterized in that the anti-splintering device (1116) consists of a plug part (1118) which can be detachably connected to the sawing machine and has two anti-splintering members (1120, 1122) which can be arranged laterally from the saw blade (18) and can be brought into pressure contact with the saw blade (10).

9. Sawing machine according to one of Claims 1 to 8, characterized in that the anti-splintering members (1120, 1122) are articulated on the plug part (1118).

10. Sawing machine according to one of Claims 1 to 9, characterized in that the anti-splintering members (1120, 1122) interact with at least one spring element (1130) which tends to bring the anti-splintering members (1120, 1122) into pressure contact with the saw blade (10).

11. Sawing machine according to one of Claims 1 to 10, characterized in that the anti-splintering members (1120, 1122) possess sensors (1132, 1134) in the region of contact with the saw blade (10).

12. Sawing machine according to one of Claims 1 to 11, characterized in that the anti-splintering members (1120, 1122) are parts which are offset in steps and consist of cuttable material.

13. Anti-splintering device according to one of Claims 1 to 12, characterized in that the anti-splintering device (16) can be connected to the sawing machine in an articulated manner and can be pivoted about the axis (24) of the saw blade (10) or about an axis (25) extending parallel to this axis (24).

14. Anti-splintering device according to one of Claims 1 to 13, characterized in that the positioning device (3, 11) has the shape of an arm which can be pivoted about a spindle (2, 16) which extends parallel to the spindle (24) of the saw blade (14) or is adjustable along a curve which lies in a plane extending perpendicularly to the spindle.

15. Anti-splintering device according to one of Claims 1 to 14, characterized in that the anti-splintering device (634) has the shape of a section of a cylinder, is rotatable about its spindle (4) and consists of a cuttable material.

16. Anti-splintering device according to one of Claims 1 to 15, characterized in that the pivot spindle (2) of the arm is at a distance from the spindle (24) of the saw blade (14) which corresponds to the radius of the cylindrical anti-splintering device (634).

17. Anti-splintering device according to one of Claims 1 to 16, characterized in that the spindle (2) of the arm (3) is arranged above the spindle (24) of the saw blade (14) and defines, together with the latter, a plane extending perpendicularly to the workpiece surface.

18. Anti-splintering device according to one of Claims 1 to 17, characterized in that the anti-splintering device (634) has a cylindrical recess (5) which is open towards the saw blade (14).

19. Anti-splintering device according to one of Claims 1 to 18, characterized in that the radial outside (5) of the anti-splintering device (634) falls away towards the saw blade (14).

## Revendications

1. Protection anti-éclatement pour scies comportant une lame de scie qui s'applique sur l'ouvrage et peut être montée latéralement par rapport à la lame de scie pour coopérer en compression dans la zone dans laquelle les dents de la lame de scie sortent de l'ouvrage, caractérisée par au moins une installation de positionnement (3, 11) qui peut être reliée à la scie et qui porte la protection anti-éclatement (34, 634), pour que la protection anti-éclatement soit disposée de manière appropriée lorsqu'on modifie la profondeur de coupe et/ou l'angle d'inclinaison de la lame de coupe (14).

2. Protection anti-éclatement selon la revendication 1, caractérisée en ce que la protection anti-éclatement (16) peut être modifiée radialement par rapport à la largeur de scie (10) et être ainsi réglable.

3. Protection anti-éclatement selon l'une des revendications 1 ou 2, caractérisée en ce que la pression exercée par la protection anti-éclatement (16, 1116) sur la lame de scie (10) est réglable.

4. Protection anti-éclatement selon l'une des revendications 1 à 3, caractérisée en ce que la protection anti-éclatement (16, 1116) comporte un palpeur (32, 1132, 1134) coopérant en compression avec le corps (30) de la lame de scie (10), ce palpeur portant la pièce (34) coopérant par une liaison de pression avec les dents (14) de la lame de scie, cette pièce étant en forme d'organe de protection anti-éclatement.

5. Protection anti-éclatement selon l'une des revendications 1 à 4, caractérisée en ce que le palpeur (32, 1132, 1134) ainsi que l'organe de protection anti-éclatement (34) sont réglables dans la direction axiale de la lame de scie (24).

6. Protection anti-éclatement selon l'une des revendications 1 à 5, caractérisée en ce que l'organe de protection anti-éclatement (34) est réglable par rapport au palpeur (32) et en ce que le palpeur (32) est réalisé comme organe d'entraînement de l'organe de protection anti-éclatement (34).

7. Organe de protection anti-éclatement selon l'une des revendications 1 à 6, caractérisé en ce que le palpeur (32, 1132, 1134) est en un matériau servant à réaliser les paliers alors que l'organe de protection anti-éclatement (34) et en un matériau dont la dureté est inférieure à celle des dents (14) de la lame de scie.

8. Scie selon l'une des revendications 1 à 7, caractérisée en ce que la protection anti-éclatement (11, 16) est une pièce enfichable (1118) qui se relie de manière amovible à la scie et comporte deux organes de protection anti-éclatement (1120, 1122) prévus latéralement par rapport à la lame de scie (18), ces organes pouvant être mis en compression avec la lame de scie (10).

9. Scie selon l'une des revendications 1 à 8, caractérisée en ce que les organes de protection anti-éclatement (1120, 1122) sont articulés sur la pièce enfichable (1118).

10. Scie selon l'une des revendications 1 à 9, caractérisée en ce que les organes de protection anti-éclatement (1120, 1122) coopèrent avec au moins un élément à ressort (1130) qui a tendance à mettre les organes de protection anti-éclatement (1120, 1122) en liaison de compression avec la lame de scie (10).

11. Scie selon l'une des revendications 1 à 10, caractérisée en ce que les organes de protection anti-éclatement (1120, 1122) présentent des palpeurs (1132, 1134) dans la zone de contact avec la lame de scie (10).

12. Scie selon l'une des revendications 1 à 11, caractérisée en ce que les organes de protection anti-éclatement (1120, 1122) sont des pièces à décrochements en forme de gradins, qui sont réalisées en un matériau susceptible d'être coupé.

13. Protection anti-éclatement selon l'une des revendications 1 à 12, caractérisée en ce que la protection anti-éclatement (16) est reliée de manière articulée à la scie et peut pivoter autour de l'axe (24) de la lame de scie (10) ou autour d'un axe (25) parallèle à l'axe (24).

14. Protection anti-éclatement selon l'une des revendications 1 à 13, caractérisée en ce que l'installation de positionnement (3, 11) a la forme d'un bras qui peut pivoter autour d'un axe (2, 16), qui est parallèle à l'axe (24) de la lame de scie (14), ou se règle suivant une courbe située dans un plan perpendiculaire à celui passant par l'axe.

15. Protection anti-éclatement selon l'une des revendications 1 à 14, caractérisée en ce que la protection anti-éclatement (634) a la forme d'un segment de cylindre qui peut tourner autour de son axe (4) et est en un matériau susceptible d'être coupé.

16. Protection anti-éclatement selon l'une des revendications 1 à 15, caractérisée en ce que l'axe de pivotement (2) du bras est écarté de l'axe (24) de la lame de scie (14) d'une distance correspondant au rayon de la protection anti-éclatement (634) de forme cylindrique.

17. Protection anti-éclatement selon l'une des revendications 1 à 16, caractérisée en ce que l'axe du bras (3) est prévu au-dessus de l'axe (24) de la lame de scie (14) et définit avec celle-ci un plan perpendiculaire à la surface supérieure de l'ouvrage.

18. Protection anti-éclatement selon l'une des revendications 1 à 17, caractérisée en ce que la protection anti-éclatement (634) présente une cavité (5), cylindrique, ouverte vers la lame de scie (14).

19. Protection anti-éclatement selon l'une des revendications 1 à 18, caractérisée en ce que la face extérieure radiale (5) de la protection anti-éclatement (634) descend en direction de la lame de scie (14).
